Europäisches Patentamt

European Patent Office

Office européen des brevets

(11) Numéro de publication: **0 283 625 B1**

## FASCICULE DE BREVET EUROPEEN

(45) Date de publication de fascicule du brevet:
23.10.91

(51) Int. Cl.⁵: **B01D 45/00**

(21) Numéro de dépôt: 87400643.0

(22) Date de dépôt: 23.03.87

(54) **Installation d'aspiration d'un fluide chargé de particules, et véhicule équipé de ladite installation.**

(43) Date de publication de la demande:
28.09.88 Bulletin 88/39

(45) Mention de la délivrance du brevet:
23.10.91 Bulletin 91/43

(84) Etats contractants désignés:
AT BE CH DE ES GB GR IT LI LU NL SE

(56) Documents cités:
DE-A- 2 256 678
DE-A- 3 224 270
US-A- 1 544 981
US-A- 4 065 527
US-A- 4 218 226

(73) Titulaire: ETS. RIVARD S.A. Société dite:
Rue de la Fraternité
F-49920 Daumeray(FR)

(72) Inventeur: Rivard, Daniel
Rue Rouget Le Braconnier
F-49920 Daumeray(FR)

(74) Mandataire: Bonnetat, Christian et al
CABINET BONNETAT 23, Rue de Léningrad
F-75008 Paris(FR)

## Description

La présente invention concerne une installation, de préférence mobile, d'aspiration d'un fluide liquide ou gazeux, tel que notamment de l'air, chargé de particules solides ou liquides.

De manière usuelle, pour pomper, d'une part, des liquides, qui peuvent être divers effluents provenant de l'industrie, et, d'autre part, des fluides gazeux, tels que de l'air chargé de poussières de charbon par exemple, on utilise des installations, de préférence mobiles, spécialement adaptées pour chacun desdits usages. En dehors du problème lié à l'encrassement de l'appareillage, notamment des moyens de pompage, par les poussières les plus fines dispersées dans le fluide pompé, pour un même site de travail, au moins deux véhicules sont nécessaires, chacun étant prévu pour un type de pompage particulier. On a donc imaginé de prévoir une installation qui peut à la fois pomper des liquides et des fluides gazeux. Pour chaque site de travail, il n'est plus nécessaire d'utiliser qu'un seul véhicule polyvalent. Néanmoins, il est bien évident qu'également dans ce cas, le problème de l'encrassement de l'appareillage par les poussières les plus fines demeure.

Par exemple, par le brevet US-A-4 218 226, on connaît déjà une installation, de préférence mobile, d'aspiration d'un fluide liquide ou gazeux, tel que notamment de l'air, chargé de particules solides ou liquides, du type comprenant au moins un réservoir de collecte de la fraction liquide et/ou des particules les plus lourdes dispersées dans le fluide gazeux, le réservoir comportant au moins une entrée de fluide et étant relié à une extrémité d'au moins une conduite dont l'autre extrémité est connectée à des moyens pour faire le vide dans ledit réservoir, et l'installation comportant de plus un cyclone pour piéger les particules les plus légères entraînées par le flux de fluide gazeux, ledit cyclone étant branché sur ladite conduite entre le réservoir et les moyens de création de vide.

La présente invention a pour objet une telle installation, dans laquelle, en particulier les plus fines poussières ne sont plus susceptibles d'affecter le fonctionnement de l'installation.

A cet effet, selon l'invention, l'installation du type décrit ci-dessus, est caractérisée en ce qu'elle comporte des moyens de mouillage des particules solides les plus légères par injection de liquide, par exemple d'eau, dans le flux de fluide gazeux circulant dans ladite conduite, au voisinage de l'entrée dudit cyclone.

Ainsi, on favorise le mélange intime air-liquide-poussière, avant son entrée dans le cyclone, de sorte que l'efficacité de ce dernier est augmentée. L'installation conforme à l'invention permet donc d'éviter que les particules, notamment solides les plus légères n'atteignent les parties fragiles de l'appareillage, notamment les moyens de pompage, en risquant de les encrasser et de nuire ainsi au bon fonctionnement de l'installation.

On remarquera que le brevet DE-A-3 224 270 concerne un cyclone muni de moyens de mouillage des particules entraînées dans le fluide gazeux le traversant. Toutefois, dans ce cas, les buses de pulvérisation de liquide sont agencées dans le tube de sortie axial, relié au tube de sortie de gaz, du cyclone.

Selon une autre caractéristique de l'invention, l'installation comporte de plus une cuve, reliée à la sortie du cyclone, pour recueillir le mélange liquide (notamment de l'eau) - particules.

De préférence, les moyens de mouillage des particules comprennent au moins une pompe reliée, en aval, à la conduite et, en amont, à ladite cuve préalablement partiellement remplie de liquide de mouillage, notamment de l'eau.

Selon encore une autre caractéristique de l'invention, la pompe peut être reliée, d'une part en amont, au fond de la cuve et, d'autre part, en aval, au réservoir principal de collecte.

On peut prévoir, en outre, une conduite d'équilibrage de pression entre la surface de liquide dans la cuve et le cyclone.

Selon encore une autre caractéristique de l'invention, le cyclone comprend : une spirale d'entrée avec tuyère d'accélération ; un corps cylindrique de séparation ; un cône récepteur du mélange liquide-particules mouillées ; et une cheminée centrale de sortie du fluide gazeux. Ladite cheminée centrale du cyclone peut être munie d'un moyen d'antigiration.

L'invention sera mieux comprise, et d'autres détails, caractéristiques et avantages de celle-ci apparaîtront plus clairement à la lumière de la description explicative qui va suivre d'un mode de réalisation actuellement préféré de l'invention, description faite en référence aux dessins schématiques annexés, dans lesquels :

- la figure 1 est une vue d'ensemble schématique, partiellement en coupe, de l'installation de pompage de l'invention ;
- la figure 2 est une vue en coupe schématique du cyclone utilisé dans l'installation de l'invention ; et
- la figure 3 est une vue en coupe schématique selon la ligne III-III de la figure 2.

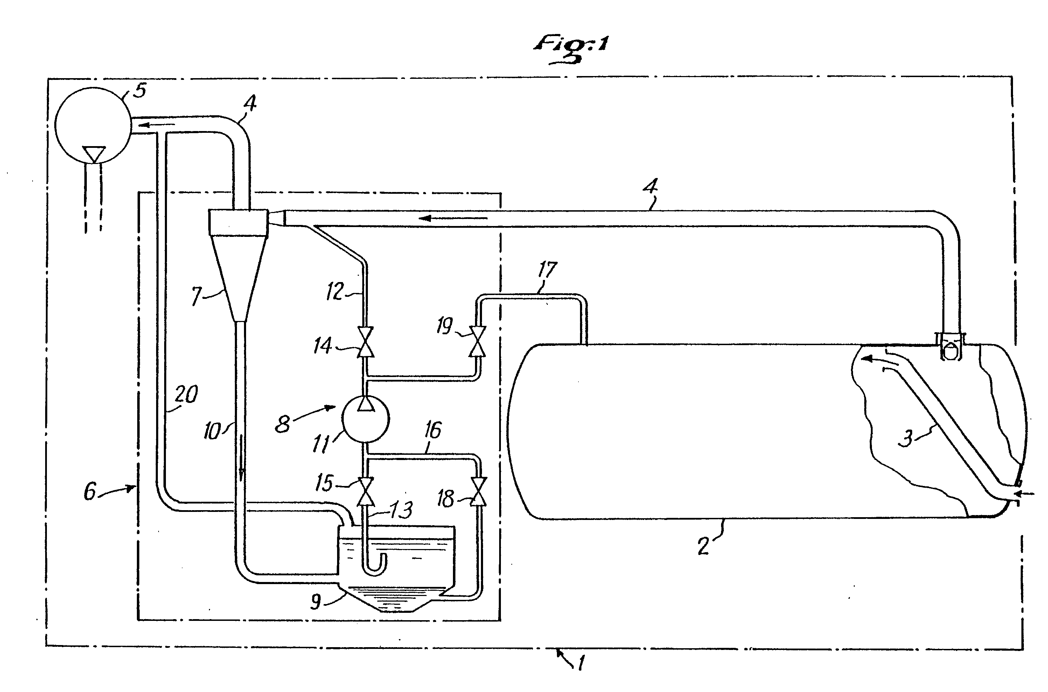

En se référant en particulier à la figure 1, l'installation 1, de préférence mobile, de pompage d'un fluide liquide ou gazeux, tel que notamment de l'air, chargé de particules solides, ou éventuellement liquides tels que des embruns, comprend au moins un réservoir de collecte 2 de la fraction liquide et/ou des particules solides les plus lourdes dispersées dans le fluide gazeux, le réservoir 2

comportant au moins une entrée 3 de fluide et étant reliée à une extrémité d'au moins une conduite 4 dont l'autre extrémité est connectée à des moyens 5 pour faire le vide dans le réservoir 2 ; l'extrémité de la conduite 4 reliée au réservoir 2 pouvant être munie d'un dispositif d'arrêt au remplissage (flotteur).

Une telle installation de pompage peut être montée sur un véhicule (non représenté), notamment une remorque de camion, et est ainsi facilement déplaçable d'un site de travail à un autre.

Comme moyens 5 pour créer le vide dans le réservoir 2, on peut utiliser, par exemple, une pompe à anneau liquide, ou une pompe à palettes.

L'installation 1 de pompage, selon l'invention, est notamment remarquable en ce qu'elle comporte un dispositif 6 pour piéger les particules les plus légères entraînées par le flux de fluide gazeux dans la conduite 4, ledit dispositif 6 étant branché sur la conduite 4 entre le réservoir 2 et les moyens 5 de création de vide, et extrayant les particules légères de la conduite 4.

Le dispositif 6 de piégeage des particules légères comporte au moins un moyen formant cyclone 7 et, comme cela est illustré, des moyens 8 de mouillage des particules solides les plus légères, par exemple par injection d'eau dans le flux de fluide gazeux, prévus en amont du cyclone 7.

En outre, le dispositif 6 de piégeage des particules comporte une cuve 9, reliée à la sortie du cyclone 7 par une canalisation d'évacuation 10, la cuve 9 recueillant le mélange liquide (notamment de l'eau) - particules, mélange qui forme une boue qui va se déposer au fond de la cuve.

Les moyens 8 de mouillage des particules comprennent au moins une pompe 11 reliée, en aval, par une conduite 12 à la conduite 4, reliant le réservoir principal 2 et la pompe 5, au voisinage de l'entrée du cyclone 7 et, en amont, de préférence à la cuve 9 préalablement partiellement remplie de liquide de mouillage, notamment de l'eau, et cela par l'intermédiaire d'une conduite 13. Les conduites 12 et 13 sont munies de vannes 14 et 15, respectivement.

De plus, la pompe 11 peut être reliée, d'une part en amont, au fond de la cuve 9 par une conduite 16 et, d'autre part, en aval, au réservoir 2 de collecte par une conduite 17 ; les conduites 16 et 17 étant munies de vannes 18 et 19, respectivement.

Enfin, on prévoit, dans l'installation, une conduite 20 d'équilibrage de pression entre la surface de liquide dans la cuve 9 et le cyclone 7.

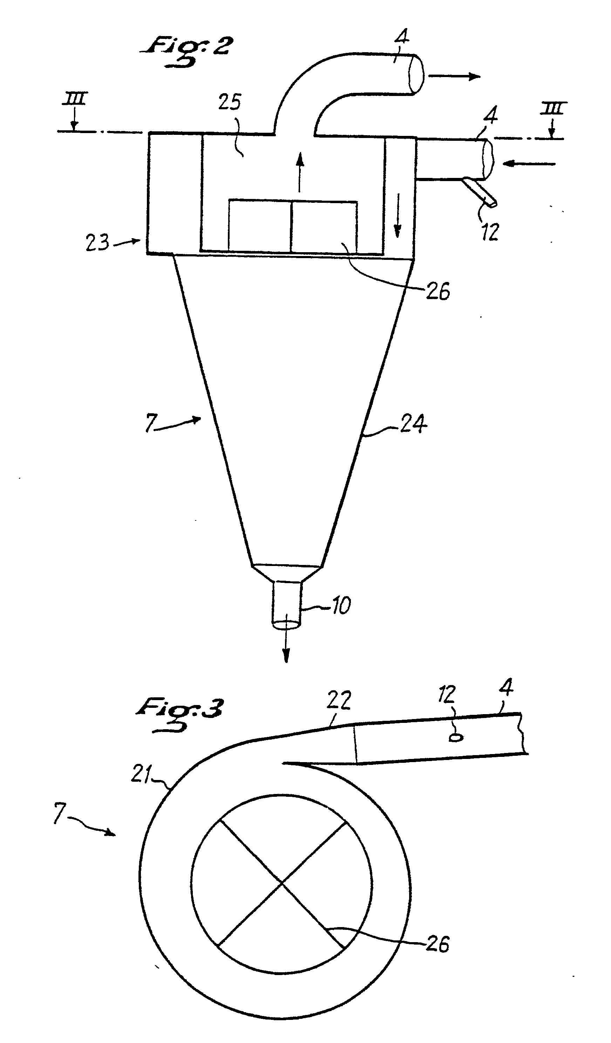

En se référant maintenant plus particulièrement aux figures 2 et 3, le cyclone 7, utilisé dans l'installation de l'invention, comprend une spirale d'entrée 21 avec tuyère d'accélération 22 ; un corps cylindrique de séparation 23 ; une cône 24 pour la réception du mélange liquide-particules mouillées et une oheminée centrale 25 de sortie du fluide gazeux ; la cheminée centrale 25 du cyclone étant munie d'une croix d'antigiration 26.

L'installation de pompage, selon l'invention, fonctionne de la manière suivante.

La pompe 5 crée le vide dans le réservoir 2. La différence de pression entre l'intérieur et l'extérieur du réservoir entraîne le transfert du fluide de l'extérieur vers l'intérieur du réservoir à très grande vitesse.

Si le fluide est liquide, le vide est maintenu à la pression près de la tension de la vapeur saturante du liquide, à une température donnée. Si le liquide est transporté en émulsion avec de l'air, il faut séparer l'air du liquide ; cela se faisant essentiellement dans le réservoir. Pour obtenir cette séparation, ou joue, à la fois, sur la différence de densité de l'air et du liquide pompés, la vitesse d'entrée dans le réservoir, et la vitesse de retour de l'air à la sortie du réservoir.

Le remplissage s'effectue au voisinage du fond arrière du réservoir, et la conduite 3 d'entrée de fluide s'étend, à l'intérieur du réservoir 2, vers l'avant de ce dernier et vers le haut ; le pompage de l'air s'effectuant en amont de cette conduite 3.

La vitesse de pénétration dans le réservoir est telle que toutes les particules denses sont projetées vers l'avant et piégées dans le réservoir, tandis que le passage retour de l'air se fait par une très grande section, et donc à faible vitesse ; cette faible vitesse interdisant le maintien en suspension des particules denses.

On doit noter que le remplissage maximum du réservoir est calculé en fonction de l'espace libre nécessaire au retour de l'air à faible vitesse, c'est-à-dire environ dix fois la section de la conduite de remplissage. On peut prévoir un niveau automatique (non représenté), qui, en fonction du niveau maximum choisi, arrêtera l'installation ; un système de commutation permettant de jouer sur le niveau maximum dans le réservoir.

Dans le cas où l'on a à pomper un fluide gazeux chargé de particules solides, par exemple des poussières de charbon, il est bien entendu que le principe général de remplissage du réservoir est conservé de sorte qu'il y a séparation de l'air et des poussières denses dans le réservoir. Seules, les poussières les plus légères restent en suspension dans l'air et s'échappent du réservoir.

Pour piéger ces particules et les extraire du flux de fluide gazeux circulant dans la conduite 4, on utilise le dispositif 6 selon l'invention, comportant, notamment, le cyclone 7 et les moyens 8 de mouillage des particules légères qui permet d'alourdir celles-ci, de façon à faciliter leur extraction du flux de fluide gazeux par le cyclone.

En fonctionnement, la cuve 9 est remplie d'eau jusqu'à un volume donné, le volume libre correspondant au volume de stockage des boues formées par le mélange particules solides légères-eau. La pompe 11 aspire l'eau dans la cuve 9, environ à mi-hauteur, et refoule dans la canalisation 12 à l'entrée du cyclone 7. L'entrée du cyclone 7 comporte une tuyère 22 d'accélération de manière à, d'une part, créer un mélange intime air-eau-poussière du fait de l'atomisation de l'eau obtenue par la vitesse importante de l'air dans le cyclone 7, et, d'autre part, créer dans le cyclone une vitesse de giration maximale pour obtenir la centrifugation air-eau.

On peut donc calculer les paramètres du cyclone de façon à obtenir une vitesse de giration maximale, une descente d'air à très faible vitesse dans le corps cylindrique du cyclone, et une remontée d'air dans la cheminée centrale à très faible vitesse, afin d'éviter d'entraîner des gouttelettes d'eau.

La conduite d'évacuation 10 du cyclone 7 peut être branchée sur le dôme de la cuve, ou, comme dans le mode de réalisation représenté, l'évacuation peut être prévue de manière à plonger dans le volume d'eau, une conduite 20 d'équilibrage de pression étant alors nécessaire entre la surface du plan d'eau et l'intérieur du cyclone.

D'autre part, afin de procurer une plus grande autonomie à l'installation, la pompe 11 peut être reliée, à la fois, au fond de la cuve 9 et au réservoir principal 2 de façon à permettre le transfert des boues de la cuve 9 au réservoir 2 de collecte. Un dispositif de curage automatique peut éventuellement être mis en place. Ce dispositif sera opérationnel pendant tout le temps de fonctionnement.

On notera enfin que, dans le cas du pompage d'un liquide, le cyclone permet de capter les embruns, ceux-ci étant transférés dans le réservoir de collecte une fois le niveau maximum tolérable atteint dans la cuve auxiliaire 9. Ainsi, on ne risque plus d'entraîner vers la pompe à vide d'autres fluides que des fluides gazeux.

## Revendications

1.  Installation, de préférence mobile, d'aspiration d'un fluide liquide ou gazeux, tel que notamment de l'air, chargé de particules solides ou liquides, du type comprenant au moins un réservoir de collecte (2) de la fraction liquide et/ou des particules les plus lourdes dispersées dans le fluide gazeux, le réservoir (2) comportant au moins une entrée de fluide (3) et étant relié à une extrémité d'au moins une conduite (4) dont l'autre extrémité est connectée à des moyens (5) pour faire le vide dans ledit réservoir (2), et l'installation comportant de plus un cyclone (7) pour piéger les particules les plus légères entraînées par le flux de fluide gazeux, ledit cyclone étant branché sur ladite conduite (4) entre le réservoir (2) et les moyens (5) de création de vide, caractérisée en ce qu'elle comporte des moyens (8) de mouillage des particules solides les plus légères par injection de liquide, par exemple d'eau, dans le flux de fluide gazeux circulant dans ladite conduite (4), au voisinage de l'entrée dudit cyclone (7).

2.  Installation selon la revendication 1, caractérisée en ce qu'elle comporte une cuve (9), reliée à la sortie du cyclone (7), pour recueillir le mélange liquide (notamment de l'eau) - particules.

3.  Installation selon la revendication 2, caractérisée en ce que les moyens (8) de mouillage des particules comprennent au moins une pompe (11) reliée, en aval, à la conduite (4) et, en amont, à ladite cuve (9) préalablement partiellement remplie de liquide de mouillage, notamment de l'eau.

4.  Installation selon la revendication 3, caractérisée en ce que la pompe (11) peut être reliée, d'une part, en amont, au fond de la cuve (9) et, d'autre part, en aval, au réservoir principal de collecte (2).

5.  Installation selon l'une quelconque des revendications 2 à 4, caractérisée par une conduite (20) d'équilibrage de pression entre la surface de liquide dans la cuve (9) et le cyclone (7).

6.  Installation selon l'une quelconque des revendications 1 à 5, caractérisée en ce que le cyclone (7) comprend : une spirale d'entrée (21) avec tuyère d'accélération (22) ; un corps cylindrique de séparation (23) ; un cône (24) récepteur du mélange liquide-particules mouillées, et une cheminée centrale (25) de sortie de fluide gazeux.

7.  Installation selon la revendication 6, caractérisée en ce que la cheminée centrale (25) du cyclone (7) est munie d'un moyen d'antigiration (26).

8.  Véhicule, caractérisé en ce qu'il est équipé d'une installation selon l'une quelconque des revendications 1 à 7.

## Claims

1. Installation, preferably mobile, for aspiration of a liquid or gaseous fluid, such as air, charged with solid or liquid particles, of the type comprising at least a tank (2) for collecting the liquid fraction and/or the heaviest particles dispersed in the gaseous fluid, tank (2) comprising at least a fluid inlet (3) and being connected to one end of at least one duct (4) of which the other end is connected to means (5) for evacuating said tank (2), and the installation further comprising a cyclone (7) to trap the lightest particles drawn by gaseous fluid flow, said cyclone being connected to said duct (4) between said tank (2) and said evacuating means (5),
characterized in that it comprises means (8) for moistening the lightest solid particles by liquid injection, for instance water injection, into gaseous fluid flow circulating in said duct (4), in the vicinity of the inlet of said cyclone (7).

2. Installation according to claim 1,
characterized in that it comprises a container (9), connected to the outlet of cyclone (7), for collecting the liquid (especially water)-particle mixture.

3. Installation according to claim 2,
characterized in that said particle moistening means (8) comprise at least one pump (11) connected downstream to the duct (4) and upstream to said container (9) previously partially filled with moistening liquid, such as water.

4. Installation according to claim 3,
characterized in that pump (11) is connectable, on the one hand, upstream to the bottom of container (9) and, on the other hand, downstream to main collecting tank (2).

5. Installation according to any one of claims 2 to 4,
characterized by a duct (20) for balancing pressure between liquid surface in container (9) and cyclone (7).

6. Installation according to any one of claims 1 to 5,
characterized in that cyclone (7) comprises : an inlet spiral (21) with accelerating nozzle (22) ; a cone (24) for reception of the moistened particle-liquid mixture, and a central funnel (25) for evacuation of gaseous fluid.

7. Installation according to claim 6,
characterized in that said central funnel (25) of cyclone (7) is provided with antigyrating means (26).

8. Vehicle,
characterized in that it is provided with an installation according to any one of claims 1 to 7.

## Patentansprüche

1. Vorzugsweise mobile Einrichtung zum Absaugen eines mit festen oder flüssigen Partikeln beladenen flüssigen oder gasförmigen Fluids, insbesondere Luft, mit mindestens einem Behälter zum Sammeln (2) der flüssigen Fraktion und/oder der schwersten in dem gasförmigen Fluid verteilten Partikel, wobei der Behälter (2) mindestens einen Einlaß für das Fluid (3) aufweist und mit einem Ende mindestens einer Leitung (4) verbunden ist, deren anderes Ende an Mittel (5) zur Erzeugung eines Unterdrucks in dem Behälter (2) angeschlossen ist, und mit einem Zyklon (7) zum Auffangen der leichtesten vom Strom des gasförmigen Fluids mitgeführten Partikel, welcher Zyklon in die Leitung (4) zwischen dem Behälter (2) und den Mitteln (5) zur Erzeugung eines Unterdrucks eingeschaltet ist,
dadurch gekennzeichnet, daß sie Mittel (8) aufweist zum Befeuchten der leichtesten festen Partikel durch Einsprühen von Flüssigkeit, beispielsweise Wasser, in den Strom des gasförmigen, in der Leitung (4) strömenden Fluids, und zwar in der Nähe des Einlasses des Zyklons (7).

2. Einrichtung nach Anspruch 1,
dadurch gekennzeichnet, daß sie einen Bottich (9) aufweist, der mit dem Auslaß des Zyklons (7) verbunden ist, um das Gemisch aus Flüssigkeit (insbesondere Wasser) und Partikeln aufzufangen.

3. Einrichtung nach Anspruch 2,
dadurch gekennzeichnet, daß die Mittel (8) zum Befeuchten der Partikel mindestens eine Pumpe (11) enthalten, die an der Förderseite mit der Leitung (4) und an der Saugseite mit dem zuvor teilweise mit Befeuchtungsflüssigkeit, insbesondere Wasser, gefüllten Bottich (9) verbunden ist.

4. Einrichtung nach Anspruch 3,
dadurch gekennzeichnet, daß die Pumpe (11) einerseits an der Saugseite mit dem Bodenanschluß des Bottichs (9) und andererseits an der Druckseite mit dem Hauptsammelbehälter (2) verbunden sein kann.

5. Einrichtung nach einem der vorhergehenden Ansprüche 2 - 4, gekennzeichnet durch eine Druckausgleichsleitung (20) zwischen der Oberfläche der Flüssigkeit in dem Bottich (9) und dem Zyklon (7).

6. Einrichtung nach einem der vorhergehenden Ansprüche 1 - 5, dadurch gekennzeichnet, daß der Zyklon (7) umfaßt: eine Eingangsspirale (21) mit Beschleunigungsdüse (22); einen zylindrischen Trennkörper (23); einen Konus (24) zur Aufnahme des Gemisches aus Flüssigkeit und feuchten Partikeln, und einen zentralen Kamin (25) zum Abzug des gasförmigen Fluids.

7. Einrichtung nach Anspruch 6, dadurch gekennzeichnet, daß der zentrale Kamin (25) des Zyklons (7) mit einem der Rotation entgegenwirkenden Mittel (26) versehen ist.

8. Fahrzeug, dadurch gekennzeichnet, daß es mit einer Einrichtung nach einem der Ansprüche 1 - 7 aus- gestattet ist.

Fig.1

## *Fig. 2*

## *Fig. 3*